# EUROPÄISCHE PATENTSCHRIFT

(11) **EP 1 346 852 B1**
(45) Veröffentlichungstag und Bekanntmachung des Hinweises auf die Patenterteilung: **06.09.2006**
(21) Anmeldenummer: 03001598.6
(22) Anmeldetag: 24.01.2003
(51) Int. Cl.: B60C 11/13, B60C 11/00

(54) **Fahrzeugluftreifen**
Tyre
Bandage pneumatique

(30) Priorität: 22.03.2002 DE 10212800
(43) Veröffentlichungstag der Anmeldung: 24.09.2003
(73) Patentinhaber: Continental Aktiengesellschaft, 30165 Hannover (DE)
(72) Erfinder: Fries, Volkmar, Dr., 30926 Seelze (DE)

(56) Entgegenhaltungen:
- EP-A- 0 661 182
- US-A- 2 756 797
- PATENT ABSTRACTS OF JAPAN vol. 1997, no. 10, 31. Oktober 1997 (1997-10-31) & JP 09 156321 A (SUMITOMO RUBBER IND LTD), 17. Juni 1997 (1997-06-17)
- DATABASE WPI Section Ch, Week 199344 Derwent Publications Ltd., London, GB; Class A95, AN 1993-348076 XP002267203 & JP 05 254314 A (BRIDGESTONE CORP), 5. Oktober 1993 (1993-10-05)

## Beschreibung

Die Erfindung betrifft einen Fahrzeugluftreifen mit einem Laufstreifen mit einem in Umfangsrichtung umlaufende Profilrippen und umlaufende Umfangsnuten aufweisenden Profil.

Es ist bekannt, dass bei einem Bremsvorgang die übertragenen Tangentialspannungen in der Bodenaufstandsfläche "verbraucht" werden, wobei die in Querrichtung auftretenden Spannungen in der Kontaktfläche durch Gleiten abgebaut werden. Die Standardgeometrie von Umfangsnuten wird durch Rippenflanken bestimmt, die unter einem konstanten Flankenwinkel von etwa 10° verlaufen. Am Profilgrund sind die Nuten abgerundet ausgeführt. Bei einem derartigen Profil ergibt sich beim Bremsen eine günstige Kontaktdruckverteilung, sodass weitere Maßnahmen zur Vergleichmäßigung der Druckverteilung, um die Bremskraft zu erhöhen, keine Vorteile bringen können.

Die übertragbare Bremskraft eines Profils mit umlaufenden Rippen und umlaufenden Nuten lässt sich bekannter Weise durch eine größere Kontaktfläche erhöhen. Die Aquaplaningeigenschaften eines Profils erfordern jedoch einen gewissen Profilnegativenanteil, sodass diesbezüglich konträre Ziele zu verfolgen wären.

Es ist bereits vorgeschlagen worden, über die Auslegung des Nutquerschnittes auf bestimmte Eigenschaften eines Profils Einfluss zu nehmen. So ist es beispielsweise aus der DE-A-36 19 149 bekannt, Nuten mit einer Rippenflankenkontur, die entlang der Radialen ausgerichtet ist, im Bereich des Rillengrundes besonders geometrisch zu gestalten, um die Spannungen in diesem Bereich zu verringern und die Rissanfälligkeit zu senken. Des weiteren sind Umfangsnuten mit unterschiedlich geneigten Rippenflanken bekannt, beispielsweise aus der EP-A-0 648 622.

Aus der US-A-2756797 ist ein Fahrzeugluftreifen mit einem Laufstreifen mit umlaufenden Profilrippen und umlaufenden Umfangsnuten bekannt, dessen Nutflanken jeweils einen oberen Abschnitt aufweisen, welche unter einem konstanten Winkel, welcher zwischen 0° und 15° beträgt, zur radialen Richtung und einwärts geneigt verlaufen. An diese Flankenabschnitte schließen zum Nutgrund gekrümmte Flankenabschnitte an, die bevorzugt kreisbogenförmig verlaufen. Aus der JP-A-9156321 ist ein Reifen mit Umfangsnuten bekannt, dessen Flanken sich aus zwei Abschnitten zusammensetzen, die unter unterschiedlichen, aber jeweils konstanten Winkeln zur radialen Richtung verlaufen.

Die Erfindung hat sich zur Aufgabe gestellt, bei einem Reifen der eingangs genannten Art die übertragbare Bremskraft zu erhöhen ohne die Aquaplaningeigenschaften zu verschlechtern.

Gelöst wird die gestellte Aufgabe erfindungsgemäß durch den Anspruch 1.

Die erfindungsgemäße Maßnahme erlaubt einen Verlauf der Rippenflankenkontur nahe der Radialen unter Vergrößerung der Rippenfläche bei zumindest im Wesentlichen gleichbleibendem Nutquerschnitt. Die erzielbare Erhöhung der übertragbaren Bremskraft geht daher nicht zu Lasten der Aquaplaningeigenschaften.

Dabei ist es von besonderem Vorteil, wenn die Rippenflankenkonturen derart verlaufen, dass sich der Flankenwinkel in Richtung zum Nutgrund progressiv vergrößert. Durch diese Maßnahme kann der Nutquerschnitt so ausgelegt werden, dass bei einer Vergrößerung der Rippenoberfläche das Nutvolumen zumindest im Wesentlichen gleich groß zu jenem von Nuten mit einer üblichen Rippenflankenkontur ist.

In diesem Zusammenhang ist es auch von Vorteil, wenn der optimale Flankenwinkelbereich mit einem Flankenwinkel von 0° an der Laufstreifenoberfläche und einem Flankenwinkel von 90° im Bereich des Nutgrundes, voll ausgenutzt wird. In jedem Fall sollte der Flankenwinkel an der Laufstreifenoberfläche größer oder gleich 0° und im Bereich des Nutgrundes kleiner oder gleich 90° sein.

Besonders vorteilhaft ist es, wenn die Rippenflanken eine Querschnittskontur aufweisen, die einem Abschnitt einer Ellipse zwischen zwei benachbarten Scheitelpunkten entspricht. Gerade eine elliptische Kontur für die Rippenflanken hat den Vorteil, dass bei einer Vergrößerung der Rippenoberfläche des Laufstreifens das Nutvolumen am ehesten gleich groß jenen von Nuten mit einer üblichen Rippenflankenkontur sein kann.

Es eignen sich aber auch gemäß der Erfindung Auslegungen der Rippenflankenkontur, die einem Abschnitt einer Hyperbel oder einer Parabel nahe eines Scheitelpunktes entsprechen.

Der gesamte Nutquerschnitt kann insbesondere so gestaltet sein, dass die beiden erfindungsgemäß ausgeführten Rippenflanken unmittelbare ineinander übergehen oder, dass die Kontur des Nutgrundes mittig zwischen den Rippenflanken eine Gerade ist.

Es ist von besonderem Vorteil, wenn erfindungsgemäß ausgeführte Nuten in einem Laufstreifen vorgesehen werden, der im Bereich der Rippen zumindest zweischichtig ausgeführt wird, wobei zwei aneinander grenzende Schichten aus Kautschukmischungen mit unterschiedlichen Elastizitätsmoduli vorgesehen werden, wobei die mit dem Untergrund in Kontakt tretende Schicht einen größeren Elastizitätsmodul aufweist. Auf diese Weise lässt sich eine besonders gleichmäßige Druckverteilung der Profilrippen zwischen den Umfangsnuten erzielen.

Weitere Merkmale, Vorteile und Einzelheiten der Erfindung werden nun anhand der Zeichnung, die ein Ausführungsbeispiel darstellt, näher beschrieben. Dabei zeigen
Fig. 1 einen Querschnitt durch einen Fahrzeugluftreifen,
Fig. 2 einen Querschnitt durch einen Teil einer Umfangsnut des Laufstreifens des Reifens aus Fig. 1 und
Fig. 3 einen vergrößerten Ausschnitt aus dem Laufstreifenbereich des Fahrzeugluftreifens aus Fig. 1.

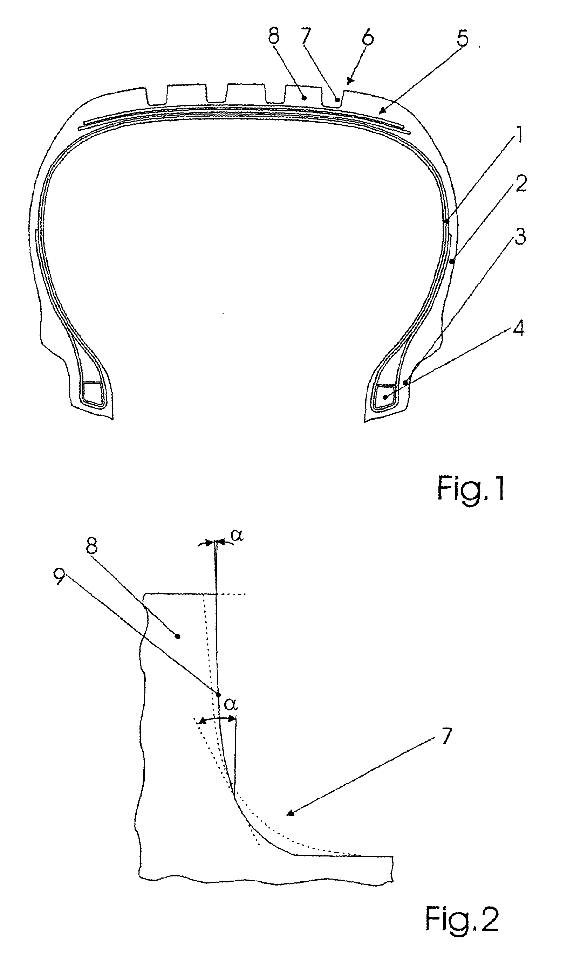

Fig. 1 zeigt einen Querschnitt durch einen Fahrzeugluftreifen in Radialbauart mit einem Rippenprofil. Der Reifen kann einen üblichen Aufbau mit einer zumindest einlagigen Radialkarkasse 1, Seitenwänden 2, Wulstbereichen 3 mit Wulstkernen 4, einem beispielsweise zweilagigen Gürtelverband 5 und einem Laufstreifen 6 aufweisen. Der Laufstreifen 6 ist mit einer Profilierung versehen, die sich aus Umfangsnuten 7 und Umfangsrippen 8 zusammensetzt. Die Umfangsnuten 7 können entweder zumindest im Wesentlichen in Umfangsrichtung gerade umlaufende Nuten oder in Zick-Zack-Form oder dergleichen in Umfangsrichtung umlaufende Nuten sein.

Bei einer Umfangsnut mit üblichem Querschnitt verlaufen die beiden begrenzenden Rippenflanken krümmungslos unter einem Winkel von beispielsweise 10° gegenüber der Radialen. Am Profilgrund ist eine derartige Umfangsnut unter einem Radius von beispielsweise 4 mm entlang eines Kreisbogens abgerundet.

Fig. 2 zeigt eine erfindungsgemäß ausgeführte Nut 7, bei der die beiden begrenzenden Rippenflanken 9, von welchen nur eine dargestellt ist, unter einem mit der Nuttiefe zunehmenden Flankenwinkel α verlaufen. Dabei zeigt Fig. 2 die bevorzugte Ausführungsform, bei der, ausgehend von der Profiloberfläche, wo der Rippenflankenwinkel höchstens 0° beträgt, also höchstens mit der Radialen zusammenfällt, mit forschreitendem Abstand von der Profiloberfläche der Winkel α größer wird, bis an der tiefsten Stelle der Nut 7, dem Nutgrund, eine Stelle ist, wo der Winkel α 90 ° beträgt. Bevorzugt folgt jede Rippenflankenkontur einem Abschnitt einer Ellipse zwischen zwei ihrer benachbarten Scheitelpunkte. Die erwähnte übliche Querschnittskontur einer Umfangsnut ist in Fig. 2 mit strichlierter Linie eingezeichnet. Dabei ist zu erkennen, dass durch den erfindungsgemäßen Verlauf der Rippenflanken 9 die Breite der Rippe 8 und damit auch dessen Kontaktfläche zum Untergrund gegenüber der bekannten Ausführung größer sind, wobei jedoch die Nutquerschnittsfläche zumindest im Wesentlichen gleich groß geblieben ist. Bei zumindest im Wesentlichen gleichbleibendem Nutvolumen wird somit gemäß der Erfindung über die größere Kontaktfläche die übertragbare Bremskraft größer.

Die elliptische Querschnittskontur der Rippenflanken 9 hat auch ein günstiges Verformungsverhalten der Rippen 8 zur Folge und bedingt eine annähernd gleichmäßige Druckerteilung.

Als Alternative zur elliptischen Kontur kommt für die Auslegung der Querschnittskontur der Rippenflanken 9 auch ein Hyperbelabschnitt in Frage, insbesondere ein Abschnitt vor oder nahe eines Scheitelpunktes, welcher dem Bereich des Nutgrundes zugeordnet wird. Als weitere Variante kommt eine Auslegung der Rippenflankenkontur entlang des Abschnittes einer Parabel in Frage, wobei auch in diesem Fall ein Abschnitt bei oder in der Nähe des Scheitels der Parabel gewählt wird und der Scheitel dem Nutgrund zugeordnet wird.

Eine elliptische Kontur für die Rippenflanken 8 hat gegenüber den erwähnten Alternativen insbesondere den Vorteil, dass bei einer Vergrößerung der Rippenoberfläche und somit der Kontaktfläche des Laufstreifens das Nutvolumen am ehesten gleich groß jenem von Nuten mit einer üblichen Rippenflankenkontur sein kann.

Demnach kommen bei einer elliptischen Auslegung der Kontur der Rippenflanken die erzielbaren Effekte am besten zum Tragen.

Darüber hinaus hat eine elliptische Kontur gegenüber Hyperbel und Parabel den Vorteil, dass unter voller Ausnutzung des Winkelbereiches von 0° bis 90° am Nutgrund keine zusätzliche Abrundung der Kontur erforderlich ist.

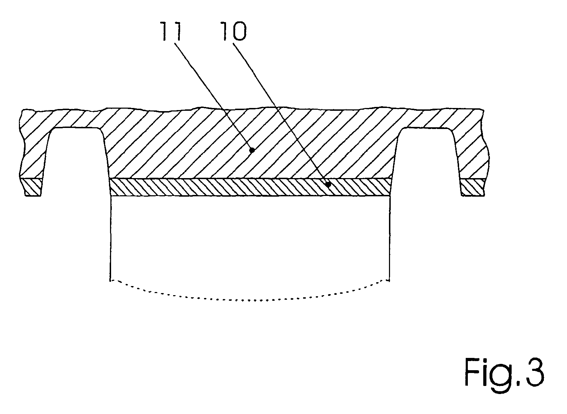

Bei Laufstreifenprofilen, die mit erfindungsgemäß ausgeführten Nuten, insbesondere mit elliptischer Flankengeometrie, versehen sind, ist eine Druckverteilung in den Profilrippen 8 feststellbar, die durch ein gewisses Druckmaximum im Mittelbereich und einen monoton abfallenden Druck zu den beiden Rippenkanten gekennzeichnet ist. Durch eine weitere erfindungsgemäße Maßnahme, die anhand der Fig. 3 erläutert wird, lässt sich die Druckverteilung vergleichsmäßigen. Gemäß Fig. 3 wird der Reifen derart aufgebaut, dass bei neuem Reifen die Rippen 8 im Bereich ihrer Kontaktfläche eine Schicht 10 aus einer Kautschukmischung mit einem härteren Elastizitätsmodul bestehen als die weiter innen gelegene Schicht 11. Die beiden Mischungsschichten 10, 11 weisen somit unterschiedliche elastische Eigenschaften auf. Die äußere, weniger elastische Schicht 10 verläuft über rund 1/3 bis ¼ der auf die Nuttiefe bezogenen Erstreckung der Rippen 8. Die auf diese Weise erzielbare gleichmäßige Druckverteilung hat eine weitere Erhöhung der übertragbaren Bremskraft zur Folge.

## Patentansprüche

1. Fahrzeugluftreifen mit einem Laufstreifen mit einem in Umfangsrichtung umlaufende Profilrippen (8) und umlaufende Umfangsnuten (7) aufweisenden Profil,
**dadurch gekennzeichnet,**
**dass** die die Umfangsnuten (7) begrenzenden Rippenflanken (9) unter einem Flankenwinkel (α) zur radialen Richtung verlaufen, welcher sich von der Profiloberfläche bis zum Nutgrund stetig vergrößert.

2. Fahrzeugluftreifen nach Anspruch 1, **dadurch gekennzeichnet, dass** sich der Flankenwinkel (α) in Richtung zum Nutgrund progressiv vergrößert.

3. Fahrzeugluftreifen nach Anspruch 1 oder 2, **dadurch gekennzeichnet, dass** der Flankenwinkel (α) an der Profiloberfläche größer oder gleich 0° und im Bereich des Nutgrundes kleiner oder gleich 90° ist.

4. Fahrzeugluftreifen nach einem der Ansprüche 1 bis 3, **dadurch gekennzeichnet, dass** die Rippenflanken (9) eine Querschnittskontur aufweisen, die einem Abschnitt einer Ellipse zwischen zwei benachbarten Scheitelpunkten entspricht.

5. Fahrzeugluftreifen nach einem der Ansprüche 1 bis 3, **dadurch gekennzeichnet, dass** die Rippenflanken (9) eine Querschnittskontur aufweisen, die einem Abschnitt einer Hyperbel oder einer Parabel nahe eines Scheitelpunktes entspricht.

6. Fahrzeugluftreifen nach einem der Ansprüche 1 bis 5, **dadurch gekennzeichnet, dass** die Kontur des Nutgrundes der Umfangsnuten (7) mittig gerade ausgeführt ist.

7. Fahrzeugluftreifen nach einem der Ansprüche 1 bis 6, **dadurch gekennzeichnet, dass** der Laufstreifen im Bereich der Rippen (8) zumindest zweischichtig ausgeführt ist, wobei die Schichten (10, 11) aus Kautschukmischungen mit unterschiedlichen Elastizitätsmoduli bestehen, wobei die mit dem Untergrund in Kontakt tretende Schicht (10) den größeren Elastizitätsmodul aufweist.

## Claims

1. Pneumatic vehicle tyre with a tread rubber having a profile comprising circumferentially running around profile ribs (8) and running around circumferential grooves (7), **characterized in that** the rib flanks (9) delimiting the circumferential grooves (7) run in relation to the radial direction at a flank angle (α) which increases constantly from the profile surface to the bottom of the groove.

2. Pneumatic vehicle tyre according to Claim 1, **characterized in that** the flank angle (α) increases progressively in the direction of the bottom of the groove.

3. Pneumatic vehicle tyre according to Claim 1 or 2, **characterized in that** the flank angle (α) is greater than or equal to 0° at the surface of the profile and is less than or equal to 90° in the region of the bottom of the groove.

4. Pneumatic vehicle tyre according to one of Claims 1 to 3, **characterized in that** the rib flanks (9) have a cross-sectional contour which corresponds to a portion of an ellipse between two adjacent vertices.

5. Pneumatic vehicle tyre according to one of Claims 1 to 3, **characterized in that** the rib flanks (9) have a cross-sectional contour which corresponds to a portion of a hyperbola or a parabola close to a vertex.

6. Pneumatic vehicle tyre according to one of Claims 1 to 5, **characterized in that** the contour of the bottom of the groove of the circumferential grooves (7) is formed centrally straight.

7. Pneumatic vehicle tyre according to one of Claims 1 to 6, **characterized in that** the tread rubber is made with at least two layers in the region of the ribs (8), the layers (10, 11) consisting of rubber mixtures with different moduli of elasticity, the layer (10) that comes into contact with the ground having the greater modulus of elasticity.

## Revendications

1. Bandage pneumatique comprenant une bande de roulement avec un profil présentant des nervures profilées continues dans la direction périphérique (8) et des rainures périphériques (7) s'étendant sur la périphérie,
**caractérisé en ce que**
les flancs des nervures (9) limitant les rainures périphériques (7) s'étendent suivant un angle de flanc (α) par rapport à la direction radiale, qui augmente de manière constante de la surface du profil jusqu'à la base de la rainure.

2. Bandage pneumatique selon la revendication 1, **caractérisé en ce que** l'angle de flanc (α) augmente progressivement dans la direction de la base de la rainure.

3. Bandage pneumatique selon la revendication 1 ou 2, **caractérisé en ce que** l'angle de flanc (α) au niveau de la surface du profil est supérieur ou égal à 0° et est inférieur ou égal à 90° dans la région de la base de la rainure.

4. Bandage pneumatique selon l'une quelconque des revendications 1 à 3, **caractérisé en ce que** les flancs des nervures (9) présentent un contour en section transversale qui correspond à une portion d'ellipse entre deux sommets adjacents.

5. Bandage pneumatique selon l'une quelconque des revendications 1 à 3, **caractérisé en ce que** les flancs des nervures (9) présentent un contour en section transversale qui correspond à une portion d'une hyperbole ou d'une parabole à proximité d'un sommet.

6. Bandage pneumatique selon l'une quelconque des revendications 1 à 5, **caractérisé en ce que** le contour de la base de rainure des rainures périphériques (7) est rectiligne au milieu.

7. Bandage pneumatique selon l'une quelconque des revendications 1 à 6, **caractérisé en ce que** la bande de roulement dans la région des nervures (8) est réalisée au moins en deux couches, les couches (10, 11) se composant de mélanges de caoutchouc avec des modules d'élasticité différents, la couche (10) entrant en contact avec le subjectile présentant le plus grand module d'élasticité.
